# EUROPEAN PATENT APPLICATION

(11) **EP 1 578 156 A1**
(43) Date of publication of application: **21.09.2005**
(21) Application number: 05005609.2
(22) Date of filing: 15.03.2005
(51) Int. Cl.: H04Q 7/32

(54) **Mobile communication terminal, network unit, mobile communication system, and method of making GSM/W-CDMA communication**

(30) Priority: 19.03.2004 JP 2004080938
(71) Applicant: NEC CORPORATION, Tokyo (JP)
(72) Inventor: Nakajima, Taketoshi, Minato-ku Tokyo (JP)
(74) Representative: Glawe, Delfs, Moll

(57) **Abstract**

A mobile communication terminal (1) through which communication can be made in accordance with both GSM (Global System for Mobile communication) and W-CDMA (Wideband-Code Division Multiple Access) includes a controller (101) which, on receipt of a signal indicating that a W-CDMA call has been made thereto during a GSM stand-by mode for waiting for a GSM call, switches the GSM stand-by mode to a W-CDMA stand-by mode for waiting for a W-CDMA call.

## Description

### BACKGROUND OF THE INVENTION

### FIELD OF THE INVENTION

The invention relates to a mobile communication terminal, a GSM access network unit, a core network unit, a mobile communication system, and a method of making communication in accordance with GSM and W-CDMA.

### DESCRIPTION OF THE RELATED ART

There have been suggested various mobile communication terminals which can make communication in accordance with both GSM (Global System for Mobile communication) and W-CDMA (Wideband-Code Division Multiple Access), for instance, in Japanese Patent Application Publications Nos. 2003-244027, 2000-32527, 2001-352576, 2003-229950, 2000-505261 (WO97/31503), 2003-507946 (WO 01/013669), and 2003-510990 (WO 01/024567).

In a conventional mobile phone, even if it received a W-CDMA call during in a stand-by mode for waiting for a GSM call, the mobile phone has attempted to respond to the W-CDMA call through a GSM transceiver, and resultingly, a core network judged not to keep the W-CDMA call alive, and hence, interrupted the W-CDMA call.

That is, a conventional mobile phone was accompanied with a problem that even if it received a W-CDMA call (for instance, a television phone call) during a stand-by mode for waiting for a GSM call, the mobile phone could not receive the W-CDMA call and make W-CDMA communication.

### SUMMARY OF THE INVENTION

In view of the above-mentioned problem in the conventional mobile phone, it is an object of the present invention to provide a mobile communication terminal which can make communication in accordance with both GSM and W-CDMA, and which can receive a W-CDMA call even during a stand-by mode for waiting for a GSM call.

It is also an object of the present invention to provide a GSM access network unit, a core network unit, a mobile communication system, and a method of making communication in accordance with GSM and W-CDMA, all of which enable a mobile communication terminal to receive a W-CDNU call even during a stand-by mode for waiting for a GSM call.

In one aspect of the present invention, there is provided a mobile communication terminal through which communication can be made in accordance with both GSM (Global System for Mobile communication) and W-CDMA (Wideband-Code Division Multiple Access), characterized by a controller which, on receipt of a signal indicating that a W-CDMA call has been made to the mobile communication terminal during a GSM stand-by mode for waiting for a GSM call, switches the GSM stand-by mode to a W-CDMA stand-by mode for waiting for a W-CDMA call.

In another aspect of the present invention, there is provided a core network unit controlling communication made in accordance with GSM and W-CDMA, wherein the core network unit, on detection of a W-CDMA call directed to a mobile communication terminal through which communication can be made in accordance with both GSM (Global System for Mobile communication) and W-CDMA (Wideband-Code Division Multiple Access), transmits a signal indicating that a W-CDMA call has been made to the mobile communication terminal, to the mobile communication terminal, the mobile communication terminal including a controller which, on receipt of the signal during a GSM stand-by mode for waiting for a GSM call, switches the GSM stand-by mode to a W-CDMA stand-by mode for waiting for a W-CDMA call.

There is further provided a core network unit controlling communication made in accordance with GSM and W-CDMA, wherein the core network unit, on detection of a W-CDMA call directed to a mobile communication terminal defined in any one of claims 4 to 6, transmits a request of paging to the mobile communication terminal through both a GSM access network unit controlling communication made in accordance with GSM and a W·CDMA access network unit controlling communication made in accordance with W-CDMA, the core network unit, on receipt of a response message transmitted from the mobile communication terminal in response to the request through the GSM access network unit, transmits a signal indicating that a W·CDMA call has been made to the mobile communication terminal, to the mobile communication terminal through the W-CDMA access network unit.

In still another aspect of the present invention, there is provided a GSM (Global System for Mobile communication) access network unit controlling communication made in accordance with GSM, wherein the GSM access network unit, on receipt of a signal indicating that a W-CDMA call has been made to a mobile communication terminal through which communication can be made in accordance with both GSM (Global System for Mobile communication) and W-CDMA (Wideband-Code Division Multiple Access), from a core network unit defined in any one of claims 9 to 11 together with a request of paging, transmits the signal together with a paging message to the mobile communication terminal.

In yet another aspect of the present invention, there is provided a mobile communication system including the above-mentioned core network unit, a GSM access network unit or the above-mentioned GSM access network unit, and a W-CDMA access network unit controlling communication made in accordance with W-CDMA.

In further another aspect of the present invention, there is provided a method of making communication in accordance with both GSM (Global System for Mobile communication) and W-CDMA (Wideband-Code Division Multiple Access) in a mobile communication system comprising a core network unit controlling communication made in accordance with GSM and W-CDMA, a GSM access network unit controlling communication made in accordance with GSM, and a W-CDMA access network unit controlling communication made in accordance with W-CDMA, the method including (a) when a W-CDMA call has been made to a mobile communication terminal through which communication can be made in accordance with both GSM and W-CDMA, transmitting a signal indicating that a W-CDMA call has been made to the mobile communication terminal, to the mobile communication terminal; and (b) on receipt of the signal in the mobile communication terminal during a GSM stand-by mode for waiting for a GSM call, switching a mode of the mobile communication terminal to a W-CDMA stand-by mode for waiting for a W-CDMA call from the GSM stand-by mode.

The advantages obtained by the aforementioned present invention will be described hereinbelow.

In accordance with the present invention, the core network unit, when a W-CDMA call has been made to a mobile communication terminal, transmits a signal indicating so to the mobile communication terminal, and the mobile communication terminal, on receipt of the signal during a GSM stand-by mode for waiting for a GSM call, switches a call-receiving mode to a W-CDMA mode from a GSM mode. Accordingly, even if the mobile communication terminal is in a GSM stand-by mode for waiting for a GSM call, the mobile communication terminal is switched into a W-CDMA stand-by mode for waiting for a W-CDMA call, when a W-CDMA call has been made to the mobile communication terminal. Thus, the mobile communication terminal can make communication in accordance with W-CDMA.

### BRIEF DESCRIPTION OF THE DRAWINGS

FIG. 1 is a block diagram of a mobile communication system in accordance with the first embodiment of the present invention.
FIG. 2 is a block diagram of a mobile phone used in the mobile communication system illustrated in FIG. 1.
FIG. 3 is a timing chart of steps to be carried out in the mobile communication system in accordance with the first embodiment.
FIG. 4 is a timing chart of steps to be carried out in the mobile communication system in accordance with the second embodiment.

### DESCRIPTION OF THE PREFERRED EMBODIMENTS

### [First Embodiment]

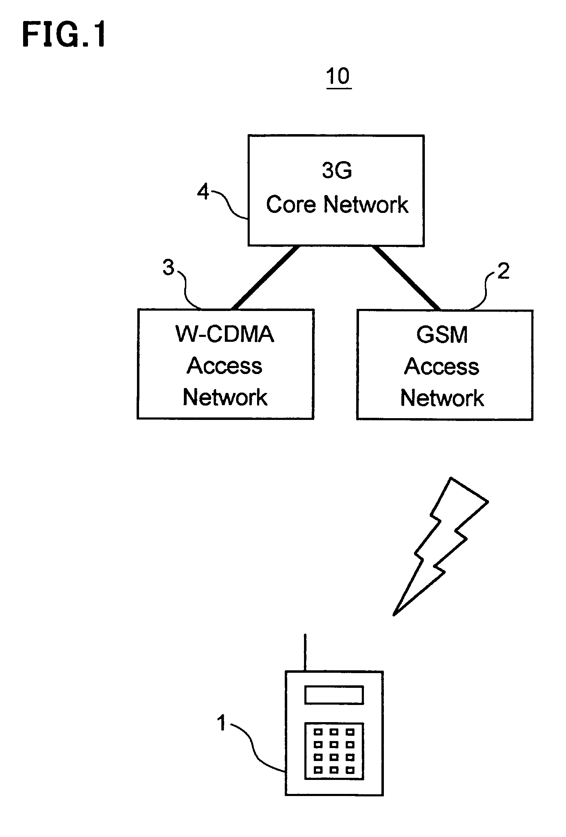

FIG. 1 is a block diagram of a mobile communication system 10 in accordance with the first embodiment of the present invention.

The mobile communication system 10 is designed to be able to make communication in accordance with both GSM and W·CDMA. Specifically, as illustrated in FIG. 1, the mobile communication system 10 is comprised of a GSM access network unit 2 controlling communication made in accordance with GSM, a W-CDMA access network unit 3 controlling communication made in accordance with W-CDMA, a 3G (third-generation) core network unit 4 controlling communication made in accordance with GSM and W·CDMA.

A mobile phone 1 is designed to have a function of making access to the GSM access network unit 2 in accordance with GSM, and further to the W-CDMA access network unit 3 in accordance with W-CDMA.

The GSM access network unit 2 controls wireless communication made in accordance with GSM, and the W-CDMA access network unit 3 controls wireless communication made in accordance with W-CDMA.

The 3G core network unit 4 controls wireless communication made in accordance with both GSM and W-CDMA. The 3G core network unit 4 can make communication with the GSM access network unit 2 and the W-CDMA access network unit 3.

Each of the GSM access network unit 2, the W-CDMA access network unit 3 and the 3G core network unit 4 is designed to have a controller (not illustrated) and a memory (not illustrated). The controller is comprised of a central processing unit. The memory is comprised of a read only memory (ROM) and a random access memory (RAM). The read only memory (ROM) stores therein a control program for controlling an operation of the controller. The controller reads the control program out of the read only memory (ROM), and operates in accordance with the control program. The random access memory (RAM) provides the controller with an area in which the controller carries out operations.

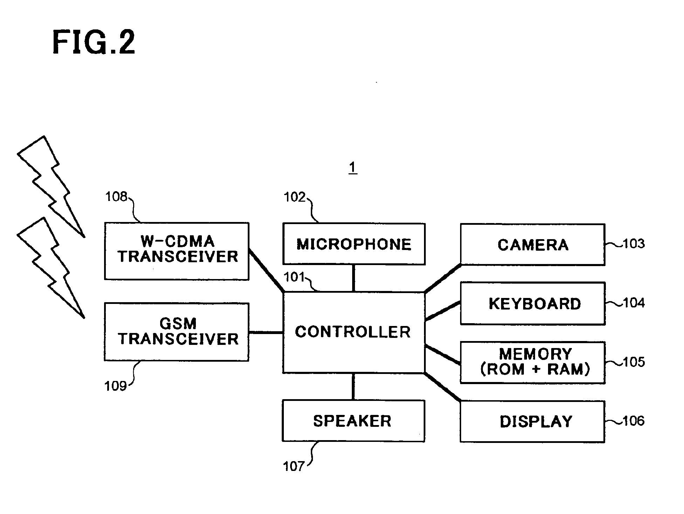

FIG. 2 is a block diagram of the mobile phone 1.

As illustrated in FIG. 2, the mobile phone 1 is comprised of a controller 101, a microphone 102, a camera 103, a keyboard 104, a memory 105, a display 106, a speaker 107, a W-CDMA wireless transceiver 108, and a GSM wireless transceiver 109.

The controller 101 controls operations of the microphone 102, the camera 103, the keyboard 104, the memory 105, the display 106, the speaker 107, the W-CDMA wireless transceiver 108, and the GSM wireless transceiver 109. For instance, the controller 101 is comprised of a central processing unit (CPU).

The microphone 102 receives voice signals of a user in communication.

A user can input image data into the controller 101 through the camera 103. The camera 103 is used in taking a picture, or making TV-phone communication which is unique to W-CDMA.

The keyboard 104 is comprised of a plurality of operational keys. A user can input data into the controller 101 through the keyboard 104.

The memory 105 is comprised of a read only memory (ROM) and a random access memory (RAM). The read only memory (ROM) stores therein a control program for controlling an operation of the controller 101. The controller 101 reads the control program out of the read only memory (ROM), and operates in accordance with the control program. The random access memory (RAM) provides the controller 101 with an area in which the controller 101 carries out operations.

The display 106 is comprised of a liquid crystal display device for displaying images. The display 106 displays characters such as letters and images such as pictures. The display 106 acts as a monitor in TV-phone communication.

The speaker 107 outputs voice signals in communication.

The W-CDMA wireless transceiver 108 receives and transmits radio signals in accordance with W·CDMA, and is designed to be able to make communication with the W-CDMA access network unit 3.

The GSM wireless transceiver 109 receives and transmits radio signals in accordance with GSM, and is designed to be able to make communication with the GSM access network unit 2.

The 3G core network unit 4 is designed to, on detection of a W-CDMA call having been made to the mobile phone 1, transmit a notification signal indicating that a W·CDMA call has been made to the mobile phone 1, to both the GSM access network unit 2 and the W-CDMA access network unit 3. Specifically, the 3G core network unit 4 in the first embodiment is designed to transmit the above-mentioned notification signal together with a request of paging to both the GSM access network unit 2 and the W-CDMA access network unit 3.

On receipt of the above-mentioned notification signal together with the request of paging, the GSM access network unit 2 transmits both the notification signal and a paging message made in response to the request of paging, to the mobile phone 1.

On receipt of the notification signal and the paging message from the GSM access network unit 2 during a GSM stand-by mode for waiting for a GSM call, the controller 101 of the mobile phone 1 switches a call-receiving mode thereof from the GSM stand-by mode to a W-CDMA stand-by mode for waiting for a W-CDMA call.

After a call-receiving mode of the mobile phone 1 has been switched from the GSM stand-by mode to the W-CDMA stand-by mode, the controller 101 causes the W-CDMA transceiver 108 to transmit a response message made in response to the notification signal, to the W-CDMA access network unit 3.

On receipt of the response message from the mobile phone 1, the W-CDMA access network unit 3 transfers the received message to the 3G core network unit 4.

The 3G core network unit 3 is designed to, on receipt of the response message from the mobile phone 1 through the W-CDMA access network unit 3, keep the W-CDMA call active.

Except what is explained above, the GSM access network unit 2, the W-CDMA access network unit 3, and the 3G core network unit 4 in the first embodiment have the same functions as those of conventional ones.

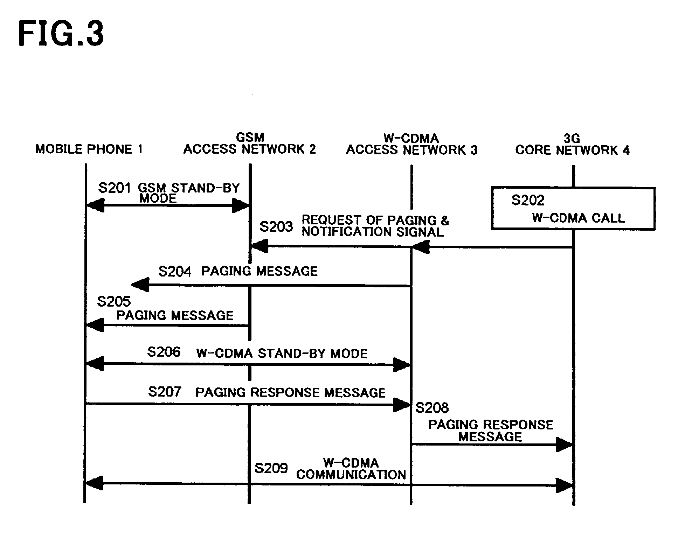

FIG. 3 is a timing chart of steps to be carried out by the mobile phone 1, the GSM access network unit 2, the W-CDMA access network unit 3, and the 3G core network unit 4 in the first embodiment. Hereinbelow is explained an operation of the mobile communication system 10 with reference to FIG. 3.

It is assumed that the mobile phone 1 is in a GSM stand-by mode, that is, the mobile phone 1 is in a mode for waiting for a GSM call to be transmitted through the GSM access network unit 2 (step S201).

If a W-CDMA call (for instance, a TV phone call) is made to the mobile phone 1, the 3G core network unit 4 detects the W-CDMA call (step S202).

At this stage, the 3G core network unit 4 does not know whether the mobile phone 1 is in a GSM stand-by mode or in a W-CDMA stand-by mode.

Hence, the 3G core network unit 4 transmits a request of paging together with a notification signal indicating that a W-CDMA call has been made to the mobile phone 1, to both the GSM access network 2 and the W-CDMA access network 3 (step S203).

On receipt of the request of paging from the 3G core network unit 4, the W-CDMA access network unit 3 transmits a paging message made in response to the request of paging, to the mobile phone 1 (step S204). However, since the mobile phone 1 is in a GSM stand-by mode, the mobile phone 1 cannot receive the paging message transmitted from the W-CDMA access network unit 3.

On receipt of the request of paging from the 3G core network unit 4, the GSM access network 2 transmits a paging message made in response to the request of paging, to the mobile phone 1 (step S205). The paging message is accompanied with the notification signal indicating that a W-CDMA call has been made to the mobile phone 1.

The GSM transceiver 109 of the mobile phone 1 receives the paging message transmitted from the GSM access network unit 2.

Since the received paging message is accompanied with the notification signal indicating that a W-CDMA call has been made to the mobile phone 1, and further since the paging message is received from the GSM transceiver 109, the controller 101 of the mobile phone 1 switches a stand-by mode thereof to a W-CDMA stand-by mode from a GSM stand-by mode (step S206).

Then, the controller 101 causes the W-CDMA transceiver 108 to transmit a paging response message to the W-CDMA access network unit 3 (step S207).

On receipt of the paging response message from the mobile phone 1, the W-CDMA access network 3 transfers the received paging response message to the 3G core network unit 4 (step S208).

The W-CDMA call is kept alive since the above-mentioned step S202. On receipt of the paging response message from the W-CDMA access network unit 3, the 3G core network unit 4 keeps the W-CDMA call alive (step S209).

Thus, the mobile phone 1 can make W-CDMA communication in the W-CDMA call having been made to the mobile phone 1 in step S202.

As explained above, in accordance with the first embodiment, when a W-CDMA call (for instance, a TV phone call) has been made to the mobile phone 1 during a GSM stand-by mode for waiting for a GSM call, the mobile phone 1 receives a notification signal indicating that a W-CDMA call has been made thereto. Since the W-CDMA call is kept alive even after the mobile phone 1 has switched a stand-by mode to a W-CDMA stand-by mode from a GSM stand-by mode, the mobile phone 1 can make W-CDMA communication in response to the W-CDMA call even during a GSM stand-by mode.

### [Second Embodiment]

The mobile phone 1 and the mobile communication system 10 in the second embodiment are designed to have the same structure as those in the first embodiment. However, the mobile phone 1 and the mobile communication system 10 in the second embodiment operate in a different manner from those in the first embodiment, as mentioned later. Parts or elements that correspond to those of the first embodiment have been provided with the same reference numerals, and operate in the same manner as corresponding parts or elements in the first embodiment, unless explicitly explained hereinbelow.

The 3G core network unit 4 in the second embodiment is designed to, on detection of a W-CDMA call having been made to the mobile phone 1, transmit a request of paging to the GSM access network unit 2 and the W-CDMA access network unit 3.

The GSM access network unit 2 in the second embodiment is designed to, when a W-CDMA has been made to the mobile phone 1, transmit a standard paging message to the mobile phone 1 in response to the request of paging transmitted from the 3G core network unit 4.

The controller 101 of the mobile phone 1 in the second embodiment is designed to cause the GSM transceiver 109 to transmit a paging response message in response to the paging message transmitted from the GSM access network unit 2.

The GSM access network unit 2 is designed to transfer a paging response message received from the mobile phone 1, to the 3G core network unit 4.

The 3G core network unit 4 is designed to judge whether a paging response message transmitted from the mobile phone 1 in response to the request of paging which was transmitted when a W·CDMA call has been made to the mobile phone 1 is transferred from either the GSM access network unit 2 or the W-CDMA access network unit 3. If the 3G core network unit 4 judges that a paging response message is transferred from the GSM access network unit 2, even though a call having been made to the mobile phone 1 is a W-CDMA call, the 3G core network unit 4 transmits a SMS (Short Message Service message) message to the mobile phone 1 such that the mobile phone 1 switches a stand-by mode thereof to a W-CDMA stand-by mode from a GSM stand-by mode. Herein, the SMS messages indicate that a W-CDMA call has been made to the mobile phone 1.

On receipt of the above-mentioned SMS message from the 3G core network unit 4, the controller 101 of the mobile phone 1 causes the GSM transceiver 109 to temporarily interrupt communication and transmit an interruption message indicating that communication is temporarily interrupted, to the 3G core network unit 4, and further, the controller 101 switches a stand-by mode of the mobile phone 1 to a W-CDNU stand-by mode for waiting for a W-CDMA call from a GSM stand-by mode for waiting for a GSM call.

On receipt of the interruption message from the mobile phone 1, the 3G core network unit 4 transmits a second request of paging only to the W-CDMA access network unit 3.

On receipt of the second request of paging from the 3G core network unit 4, the W-CDMA access network unit 3 transmits a paging message made in response to the second request, to the mobile phone 1.

On receipt of the paging message, the controller 101 of the mobile phone 1 makes a paging response message in response to the received paging message, and then, transmits the paging response message to the W-CDMA access network unit 3.

On receipt of the paging response message from the mobile phone 1, the W-CDMA access network unit 3 transfers the received paging response message to the 3G core network unit 4.

On receipt of the second paging response message from the W-CDMA access network unit 3, the 3G core network unit 4 keeps the W-CDMA call active.

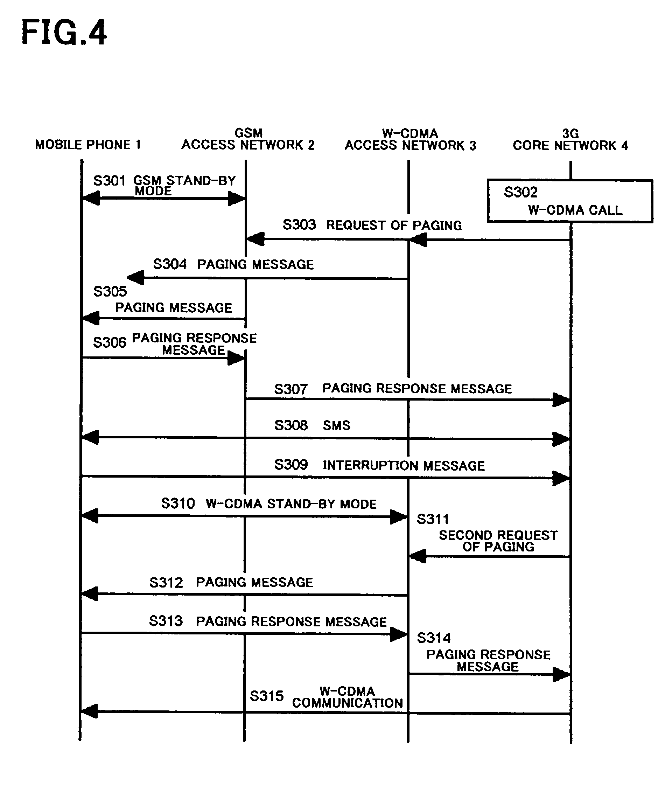

FIG. 4 is a timing chart of steps to be carried out by the mobile phone 1, the GSM access network unit 2, the W-CDMA access network unit 3, and the 3G core network unit 4 in the second embodiment. Hereinbelow is explained an operation of the mobile communication system 10 in accordance with the second embodiment, with reference to FIG. 4.

It is assumed, similarly to the first embodiment, that the mobile phone 1 is in a GSM stand-by mode (step S301).

If a W-CDMA call (for instance, a TV phone call) is made to the mobile phone 1, the 3G core network unit 4 detects the W-CDMA call (step S302).

At this stage, the 3G core network unit 4 cannot know whether the mobile phone 1 is in a GSM stand-by mode or in a W-CDMA stand-by mode.

Hence, the 3G core network unit 4 transmits a request of paging to both the GSM access network 2 and the W-CDMA access network 3 (step S303). In step S303, unlike the above-mentioned first embodiment, the request of paging is not accompanied with a notification signal indicating that a W-CDMA call has been made to the mobile phone 1.

On receipt of the request of paging from the 3G core network unit 4, the W-CDMA access network unit 3 transmits a paging message made in response to the request of paging, to the mobile phone 1 (step S304). However, since the mobile phone 1 is in a GSM stand-by mode, the mobile phone 1 cannot receive the paging message transmitted from the W-CDMA access network unit 3.

On receipt of the request of paging from the 3G core network unit 4, the GSM access network 2 transmits a paging message made in response to the request of paging, to the mobile phone 1 (step S305). In step S305, unlike the above-mentioned first embodiment, the request of paging is not accompanied with a notification signal indicating that a W-CDMA call has been made to the mobile phone 1.

The GSM transceiver 109 of the mobile phone 1 receives the paging message transmitted from the GSM access network unit 2.

Then, the controller 101 of the mobile phone 1 causes the GSM transceiver 109 to transmit a paging response message to the GSM access network unit 2 (step S306).

On receipt of the paging response message from the mobile phone 1, the GSM access network 2 transfers the received paging response message to the 3G core network unit 4 (step S307).

On receipt of the paging response message from the GSM access network unit 2, the 3G core network unit 4 recognizes that the mobile phone 1 received the call, even though the call was a W-CDMA call.

Then, the 3G core network unit 4 transmits a SMS (Short Message Service message) message to the mobile phone 1 such that the mobile phone 1 switches a stand-by mode thereof to a W-CDMA stand-by mode from a GSM stand-by mode (step S308). Herein, the SMS messages indicate that a W-CDMA call has been made to the mobile phone 1.

The mobile phone 1 receives the SMS message from the 3G core network unit 4 through the GSM transceiver 109.

The controller 101 of the mobile phone 1 judges that the received SMS message is a message for urging the mobile phone 1 to switch a stand-by mode, and thus, causes the GSM transceiver 109 to temporarily interrupt communication and transmit an interruption message indicating that communication is temporarily interrupted, to the 3G core network unit 4 (step S309).

Further, the controller 101 switches a stand-by mode of the mobile phone 1 to a W-CDMA stand-by mode for waiting for a W-CDMA call from a GSM stand-by mode for waiting for a GSM call (step S310).

On receipt of the interruption message from the mobile phone 1, the 3G core network unit 4 transmits a second request of paging only to the W-CDMA access network unit 3 (step S311).

On receipt of the second request of paging from the 3G core network unit 4, the W-CDNU access network unit 3 transmits a paging message made in response to the second request, to the mobile phone 1 (step S312).

The mobile phone 1 receives the paging message transmitted from the W-CDMA access network unit 3, through the W-CDMA transceiver 108.

Then, the controller 101 causes the W-CDMA transceiver 108 to transmit a paging response message to the W-CDMA access network unit 3 (step S313).

On receipt of the paging response message from the mobile phone 1, the W-CDMA access network unit 3 transfers the received paging response message to the 3G core network unit 4 (step S314).

The 3G core network unit 4 keeps the W·CDMA call active (step S315).

Thus, the mobile phone 1 can make W-CDMA communication in the W-CDMA call having been made to the mobile phone 1 in step S302.

In accordance with the above-mentioned second embodiment, the mobile phone 1 receives the SMS message indicating that a W-CDMA call has been made to the mobile phone 1. That is, it is possible to cause the mobile phone 1 in a GSM stand-by mode to know that a W-CDMA call has been made thereto, merely by transmitting a standard paging message to the mobile phone 1.

In place of a SMS message, there may be used USSD (Unstructured Supplement Service Data).

The interruption message in step S309 may be accompanied with a request of switching a stand-by mode of the mobile phone 1 to a W-CDMA stand-by mode from a GSM stand-by mode.

In the first and second embodiments, there may be used any mobile communication terminal such as a personal digital assistant (PDA), in place of the mobile phone 1.

## Claims

1. A mobile communication terminal (1) through which communication can be made in accordance with both GSM (Global System for Mobile communication) and W-CDMA (Wideband-Code Division Multiple Access),
**characterized by** a controller (101) which, on receipt of a signal indicating that a W-CDMA call has been made to the mobile communication terminal (1) during a GSM stand-by mode for waiting for a GSM call, switches the GSM stand-by mode to a W-CDMA stand-by mode for waiting for a W-CDMA call.

2. The mobile communication terminal (1) as set forth in claim 1, wherein the controller (101) switches the GSM sand-by mode to the W-CDMA stand-by mode when the signal is received through a GSM access network unit (2) controlling communication made in accordance with GSM.

3. The mobile communication terminal (1) as set forth in claim 2, further comprising a message transmitter (101+108) which, after the GSM sand-by mode has been switched to the W-CDMA stand-by mode, transmits a message to a W-CDMA access network unit (3) controlling communication made in accordance with W-CDMA, in response to the signal.

4. The mobile communication terminal (1) as set forth in claim 1, wherein the controller (101) switches the GSM sand-by mode to the W-CDMA stand-by mode when the signal is received through a core network unit (4) controlling communication made in accordance with GSM and W-CDMA.

5. The mobile communication terminal (1) as set forth in claim 4, further comprising:
a first unit (101+109) which temporarily interrupts communication on receipt of the signal, and, on receipt of the signal, transmits an interruption message indicating that communication is temporarily interrupted, to the core network unit (4).

6. The mobile communication terminal (1) as set forth in claim 5, wherein the interruption message includes a request for transferring to W-CDMA communication from GSM communication.

7. The mobile communication terminal (1) as set forth in any of the preceding claims, wherein the mobile communication terminal (1) is comprised of a mobile phone.

8. A core network unit (4) controlling communication made in accordance with GSM and W-CDMA, wherein
the core network unit (4), on detection of a W-CDMA call directed to a mobile communication terminal (1) through which communication can be made in accordance with both GSM (Global System for Mobile communication) and W-CDMA (Wideband-Code Division Multiple Access), transmits a signal indicating that a W-CDMA call has been made to the mobile communication terminal (1), to the mobile communication terminal (1),
the mobile communication terminal (1) including a controller (101) which, on receipt of the signal during a GSM stand-by mode for waiting for a GSM call, switches the GSM stand-by mode to a W-CDMA stand-by mode for waiting for a W-CDMA call.

9. The core network unit (4) as set forth in claim 8, wherein the controller (101) switches the GSM sand-by mode to the W-CDMA stand-by mode when the signal is received through a GSM access network unit (2) controlling communication made in accordance with GSM, and the core network unit (4) transmits the signal to the mobile communication terminal (1) through both a GSM access network unit (2) controlling communication made in accordance with GSM and a W-CDMA access network unit (3) controlling communication made in accordance with W-CDMA.

10. The core network unit (4) as set forth in claim 9, wherein the core network unit (4) transmits the signal to the mobile communication terminal (1) together with a request of paging.

11. The core network unit (4) as set forth in claim 10, wherein the core network unit (4) keeps the W-CDMA call active on receipt of a response message transmitted from the mobile communication terminal (1) in response to the signal through the W-CDMA network unit.

12. A core network unit (4) controlling communication made in accordance with GSM and W-CDMA,
wherein the core network unit (4), on detection of a W-CDMA call directed to a mobile communication terminal (1) defined in any one of claims 4 to 6, transmits a request of paging to the mobile communication terminal (1) through both a GSM access network unit (2) controlling communication made in accordance with GSM and a W-CDMA access network unit (3) controlling communication made in accordance with W-CDMA,
the core network unit (4), on receipt of a response message transmitted from the mobile communication terminal (1) in response to the request through the GSM access network unit (2), transmits a signal indicating that a W-CDMA call has been made to the mobile communication terminal (1), to the mobile communication terminal (1) through the W-CDMA access network unit (3).

13. The core network unit (4) as set forth in claim 12, wherein the core network unit (4) transmits a SMS (Short Message Service) message of USSD (Unstructured Supplement Service Data) as the signal.

14. The core network unit (4) as set forth in claim 12, wherein the core network unit (4), on receipt of an interruption message indicating that communication is temporarily interrupted, transmitted from the mobile communication terminal (1) in response to the signal through the GSM access network unit (2), transmits a further request of paging to the mobile communication terminal (1) through the W-CDMA network unit, and
the core network unit (4) keeps the W·CDMA call active on receipt of a response message transmitted from the mobile communication terminal (1) in response to the further request through the W-CDMA network unit.

15. A GSM (Global System for Mobile communication) access network unit controlling communication made in accordance with GSM,
wherein the GSM access network unit (2), on receipt of a signal indicating that a W-CDMA call has been made to a mobile communication terminal (1) through which communication can be made in accordance with both GSM (Global System for Mobile communication) and W-CDMA (Wideband-Code Division Multiple Access), from a core network unit (4) defined in any one of claims 9 to 11 together with a request of paging, transmits the signal together with a paging message to the mobile communication terminal (1).

16. The GSM access network unit (2) as set forth in claim 15, wherein the GSM access network unit (2), on receipt of a response message transmitted from the mobile communication terminal (1) in response to the signal, transmits the response message to the core network unit (4).

17. A mobile communication system comprising:
a core network unit (4) defined in any one of claims 8 and 12 to 14;
a GSM access network unit (2) controlling communication made in accordance with GSM; and
a W-CDMA access network unit (3) controlling communication made in accordance with W·CDMA.

18. A mobile communication system comprising:
a core network unit (4) defined in any one of claims 9 to 11;
a GSM access network unit (2) defined in claim 15 or 16; and
a W-CDMA access network unit (3) controlling communication made in accordance with W-CDMA.

19. A method of making communication in accordance with both GSM (Global System for Mobile communication) and W·CDMA (Wideband-Code Division Multiple Access) in a mobile communication system comprising a core network unit (4) controlling communication made in accordance with GSM and W-CDMA, a GSM access network unit (2) controlling communication made in accordance with GSM, and a W-CDMA access network unit (3) controlling communication made in accordance with W-CDMA,
the method including:
(a) when a W-CDMA call has been made to a mobile communication terminal (1) through which communication can be made in accordance with both GSM and W-CDMA, transmitting a signal indicating that a W-CDMA call has been made to the mobile communication terminal (1), to the mobile communication terminal (1); and
(b) on receipt of the signal in the mobile communication terminal (1) during a GSM stand-by mode for waiting for a GSM call, switching a mode of the mobile communication terminal (1) to a W-CDMA stand-by mode for waiting for a W-CDMA call from the GSM stand-by mode.

20. The method as set forth in claim 19, wherein the step (b) is carried out when the signal is received through the GSM access network unit (2).

21. The method as set forth in claim 20, further including:
after the GSM sand-by mode has been switched to the W·CDMA stand-by mode, transmitting a message to the W-CDMA access network in response to the signal.

22. The method as set forth in claim 19, wherein the step (b) is carried out when the signal is received through the core network unit (4).

23. The method as set forth in claim 22, further including:
temporarily interrupting communication on receipt of the signal; and
on receipt of the signal, transmitting an interruption message indicating that communication is temporarily interrupted, to the core network unit (4).

24. The method as set forth in claim 23, wherein a request for transferring to W·CDMA communication from GSM communication is transmitted together with the interruption message.

25. A program for causing a computer to carry out switching a stand-by mode to a W·CDMA stand-by mode from a GSM stand-by mode in a mobile communication terminal (1) defined in any one of claims 1 to 7.

26. A program for causing a computer to carry out transmitting a signal in a core network unit (4) defined in any one of claims 9 to 14, the signal indicating that a W-CDMA call has been made to a mobile communication terminal (1).

27. A program for causing a computer to carry out transmitting a signal together with a paging message in a GSM (Global System for Mobile communication) access network unit defined in claim 15 or 16, the signal indicating that a W-CDMA call has been made to a mobile communication terminal (1).
